# EUROPÄISCHE PATENTSCHRIFT

(11) **EP 2 756 983 B1**
(45) Veröffentlichungstag und Bekanntmachung des Hinweises auf die Patenterteilung: **11.03.2015**
(21) Anmeldenummer: 13175018.4
(22) Anmeldetag: 04.07.2013
(51) Int. Cl.: H04Q 9/00, G08B 19/00, B60N 2/00, G01G 19/02, G08C 17/02, G08C 19/00

(54) **Sicherheitssystem**
Safety system
Système de sécurité

(30) Priorität: 22.01.2013 DE 202013100282 U
(43) Veröffentlichungstag der Anmeldung: 23.07.2014
(73) Patentinhaber: Kubik, Ralf, 63849 Leidersbach (DE)
(72) Erfinder: Kubik, Ralf, 63849 Leidersbach (DE)
(74) Vertreter: Ruckh, Rainer Gerhard

(56) Entgegenhaltungen:
- WO-A1-93/20414
- WO-A1-2012/047321
- US-A1- 2009 024 336

## Beschreibung

Die Erfindung betrifft ein Sicherheitssystem.

Das Sicherheitssystem bezieht sich allgemein auf die Anwendungen im Bereich von Fahrbahnen, insbesondere öffentlich zugänglichen Straßen, Parkplätzen oder dergleichen.

Generell werden in diesem Umfeld seit einiger Zeit verstärkt Unterflursysteme im Bereich der öffentlichen Energieversorgung und der Telekommunikation eingesetzt. Aus optischen und ästhetischen Gründen werden oberirdische Verteilerkästen mit elektrischen Verteilern, umfassend elektrische Anschlussmittel wie zum Beispiel NH-Leisten für Hausanschlüsse, in Städten und Gemeinden verstärkt auch unter die Erde verlegt. Die hierzu installierten Unterflursysteme umfassen generell einen Verteiler, der in einem Schacht platziert wird, wobei der Schacht ebenerdig mit einem Schachtdeckel verschließbar ist.

Bei einem Defekt eines solchen Verteilers (zum Beispiel bei einem Kurzschluss) ist typischerweise ein ganzes Stadtviertel von der Stromversorgung getrennt. Daher muss in einem solchen Fehlerfall Wartungspersonal schnell Zugang zu diesem Verteiler haben um den Fehler möglichst schnell beheben zu können.

Ein wesentliches Problem besteht dabei darin, dass trotz typischerweise vorhandener Warn- oder Verbotsschilder Kraftfahrzeuge unbefugt auf dem Schachtdeckel eines solchen Unterflursystems parken. Wenn im Alarmfall das Bedienpersonal einen Fehler eines Verteilers im Unterflursystem beheben möchte, ist die Fehlerbehebung nicht möglich, da das Kraftfahrzeug auf dem Schachtdeckel parkt. Das Bedienpersonal kann dann zwar die Polizei rufen, um das widerrechtlich geparkte Kraftfahrzeug abschleppen zu lassen. Hierbei vergeht jedoch viel Zeit, die in einem solchen Notfall nicht zur Verfügung steht.

Die US 2009/0024336 A1 betrifft ein Messsystem zur Erfassung des Gewichts von über eine Brücke fahrenden Fahrzeugen. Die Gewichtsmessung der Fahrzeuge erfolgt auf indirektem Weg dadurch, dass von den Fahrzeugen verursachte Vibrationen der Brücke mit einem Vibrationssensor, der an dieser Brücke angeordnet ist, gemessen werden. Um auch bei stark befahrenen Brücken die mit dem Vibrationssensor generierten Signale dem jeweiligen Fahrzeug zuordnen zu können, sind optische Näherungssensoren vorgesehen, mittels derer die Frontpartie und die Heckpartie von Fahrzeugen erfasst werden kann.

Der Erfindung liegt die Aufgabe zugrunde, ein zuverlässiges Sicherheitssystem bereitzustellen, welches im Bereich der Fahrbahnüberwachung einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Sicherheitssystem mit einer in einem Fahrbahnsegment integrierten Sensoranordnung besteht aus wenigstens einem Distanzsensor und wenigstens einem Gewichtssensor. Mit einer Auswerteeinheit wird in Abhängigkeit der Sensorsignale der Sensoranordnung ein binäres Ausgangssignal generiert, dessen Schaltzustände angeben, ob sich auf dem Fahrbahnsegment ein sicherheitskritisches Objekt befindet oder nicht. Das Fahrbahnsegment umfasst einen Schachtdeckel eines Unterflursystems. Wenigstens ein von einer Wägezelle gebildeter Gewichtssensor und/oder ein Distanzsensor ist im Schachtdeckel integriert.

Das Grundprinzip des erfindungsgemäßen Sicherheitssystems besteht darin, dass mit einer diversitären Sensoranordnung, bestehend aus wenigstens einem Distanzsensor und einem Gewichtssensor, nicht nur generell das Vorhandensein von Objekten auf dem zu überwachenden Fahrbahnsegment registriert werden kann, sondern vielmehr eine Unterscheidung von sicherheitskritischen Objekten und von nicht sicherheitskritischen Objekten möglich wird, so dass mit der Generierung des Ausgangssignals nur dann eine Alarmmeldung generiert wird, wenn auf dem Fahrbahnsegment ein sicherheitskritisches Objekt vorhanden ist, das heißt tatsächlich ein Gefahrenfall vorliegt. Durch die Unterscheidung von sicherheitskritischen Objekten und nicht sicherheitskritischen Objekten mittels der Sensoranordnung werden somit unnötige Alarmmeldungen, wenn sich nur ein nicht sicherheitskritisches Objekt auf dem Fahrbahnsegment befindet, vermieden.

Das erfindungsgemäße Sicherheitssystem wird zur Überwachung von Schachtdeckeln von Unterflursystemen verwendet werden. Dabei werden mit dem Sicherheitssystem auf dem Schachtdeckel widerrechtlich parkende Kraftfahrzeuge, insbesondere Personenkraftwagen und Lastkraftwagen, erfasst. Wird mit dem Sicherheitssystem ein solches Kraftfahrzeug als sicherheitskritisches Objekt erfasst, wird dieses durch Ausgabe eines entsprechenden Ausgangssignals, welches ein Alarmsignal bildet, an eine externe Einheit, wie zum Beispiel eine Leitstelle beim Betreiber des Unterflursystems, gemeldet. Dieser kann dann das Abschleppen des widerrechtlich geparkten Kraftfahrzeugs veranlassen, so dass dieses bei einer im Unterflursystem zu tätigenden Schalthandlung den Zugang zum Schachtdeckel nicht versperrt.

Das erfindungsgemäße Sicherheitssystem kann auch zur Erfassung von sicherheitskritischen Objekten, insbesondere für Kraftfahrzeuge, die auf Straßen oder Parkflächen von sicherheitsrelevanten Einrichtungen wie Botschaften oder öffentlichen Einrichtungen, wo Personen oder eventuell Güter zu schützen sind, eingesetzt werden. Wird in solchen Fällen ein über einen gewissen Zeitraum widerrechtlich parkendes Kraftfahrzeug detektiert, kann die vom Sicherheitssystem generierte Alarmmeldung an einen Wachdienst oder direkt an die Polizei ausgegeben werden, die dann vor Ort notwendige Kontrollen durchführen kann.

Insbesondere in den letztgenannten Applikationen weist das erfindungsgemäße Sicherheitssystem gegenüber Videoüberwachungen erhebliche Vorteile auf, da dieses konstruktiv erheblich einfacher, robuster und fehlersicherer als bekannte Videoüberwachungssysteme ist. Weiterhin ist bei Videoüberwachungen nachteilig, dass die generierten Videobilder von Bedienpersonen ausgewertet werden müssen, was einen erheblichen Personaleinsatz bedeutet. Bei dem erfindungsgemäßen Sicherheitssystem dagegen wird in Abhängigkeit der Signale der Sensoranordnung selbsttätig ein Alarmsignal generiert, das unmittelbar einen Notfall meldet.

Durch die diversitäre Sensoranordnung wird eine besonders hohe Nachweissicherheit bei der Detektion von sicherheitskritischen Objekten erzielt. Da mit den Distanzsensoren mit Geometriedaten und den Gewichtssensoren Informationen über das Gewicht von Objekten ermittelt wird, werden mit der Sensoranordnung unterschiedliche Informationen über das zu detektierende Objekt erhalten, wodurch dieses sicher klassifiziert, das heißt als sicherheitskritisches Objekt oder nicht sicherheitskritisches Objekt erkannt werden kann.

Die Nachweissicherheit des Sicherheitssystems wird dadurch noch weiter erhöht, dass die Sensoranordnung eine Mehrfachanordnung von Distanzsensoren und Gewichtssensoren aufweist.

Dabei sind vorteilhaft der oder ein Distanzsensor von einem Ultraschallsensor oder einem optischen Sensor gebildet.

Weiterhin ist der oder ein Gewichtssensor von einer Wägezelle gebildet.

Gemäß einer besonders vorteilhaften Ausführungsform der Erfindung erfolgt in der Auswerteeinheit eine Schwellwertbewertung der Sensorsignale, wodurch aus den Sensorsignalen Bereichssignale generiert werden.

Dann wird in der Auswerteeinheit durch eine logische Verknüpfung von Bereichssignalen das Ausgangssignal generiert.

Vorteilhaft gilt ein sicherheitskritisches Objekt als erkannt, wenn die Sensorsignale wenigstens eines Distanzsensors oder eines Gewichtssensors innerhalb eines durch Schwellwerte definierten Bereichs liegen.

Vorteilhaft hierbei ist, dass durch die Schwellwertbewertung und die dadurch erfolgende Generierung von Bereichssignalen einerseits eine Datenreduktion und Vorverarbeitung zur Generierung des Ausgangssignals erzielt wird, wodurch eine besonders schnelle Auswertung gewährleistet ist.

Weiterhin ist vorteilhaft, dass durch die Generierung von Bereichssignalen aus den einzelnen Sensorsignalen bereits eine Klassifizierung erfolgt, anhand derer eine Unterscheidung von sicherheitskritischen Objekten und nicht sicherheitskritischen Objekten ermöglicht wird. Ist beispielsweise ein Kraftfahrzeug ein sicherheitskritisches Objekt, so kann dieses bereits dadurch von nicht sicherheitskritischen Objekten wie Personen dadurch unterschieden werden, dass als Voraussetzung für eine Erkennung eines Kraftfahrzeugs gefordert wird, dass der wenigstens eine Gewichtssensor oberhalb eines für Kraftfahrzeuge typischen Schwellwerts liegt. Weiterhin ist bei Kraftzeugen generell ein Fahrzeugboden vorhanden, der entsprechend dem Fahrwerk innerhalb eines gewissen Bereichs oberhalb der Fahrbahn liegt. Die Sensorsignale der Distanzsensoren können dann mit Schwellwerten bewertet werden, die an diese typischen Bereiche angepasst sind.

Gemäß einer vorteilhaften Weiterbildung der Erfindung erfolgt in der Auswerteeinheit eine zeitaufgelöste Auswertung der Bereichssignale.

Dann gilt ein sicherheitskritisches Objekt als erkannt, wenn die Sensorsignale wenigstens eines Distanzsensors oder eines Gewichtssensors für eine vorgegebene Mindestdauer innerhalb eines durch Schwellwerte definierten Bereichs liegen.

Dadurch werden die Nachweissicherheit und Detektionssicherheit des Sicherheitssystems weiter erhöht. Insbesondere werden dadurch unnötige Alarmmeldungen durch über das Fahrbahnsegment fahrende Kraftfahrzeuge vermieden. In derartigen Fällen spricht die Sensoranordnung nur so kurzzeitig auf das Kraftfahrzeug an, dass keine Alarmmeldung generiert wird.

Prinzipiell kann die Auswerteeinheit des Sicherheitssystems außerhalb des Fahrbahnsegments angeordnet sein.

Besonders vorteilhaft ist die Auswerteeinheit in dem Fahrbahnsegment integriert und bildet mit der Sensoranordnung eine Baueinheit und eine Funktionseinheit.

Vorteilhaft wird das Ausgangssignal berührungslos oder leitungsgebunden an die externe Einheit übertragen.

Insbesondere wird das Ausgangssignal mittels Funksignalen an die externe Einheit übertragen.

Für den Fall, dass das Sicherheitssystem in einem Schachtdeckel eines Unterflursystems integriert ist, kann vorteilhaft im Schachtdeckel ein Ortungssystem angeordnet sein, mittels dessen der Schachtdeckel geortet werden kann. Diese Ausführungsform ist besonders vorteilhaft in Gebirgsregionen einsetzbar. Wird der Schachtdeckel beispielsweise durch eine Lawine verschüttet, kann dieser jederzeit wieder aufgefunden werden, in dem das Ortungssystem Ortungssignale, beispielsweise in Form von Funksignalen aussendet.

Die Erfindung wird im Folgenden anhand der Zeichnungen erläutert. Es zeigen:
- Figur 1:: Ausführungsbeispiel eines Sicherheitssystems, das in einem Schachtdeckel integriert ist, bei einem nicht direkt auf dem Schachtdeckel aufstehenden Kraftfahrzeug.
- Figur 2:: Anordnung gemäß Figur 1 bei einem direkt auf dem Schachtdeckel aufstehenden Kraftfahrzeug.
- Figur 3:: Schwellwertvorgaben für den Distanzsensor und Gewichtssensor des Sicherheitssystems gemäß den Figuren 1 und 2.
- Figur 4:: Ausführungsbeispiel eines in einer Fahrbahn integrierten Sicherheitssystems.

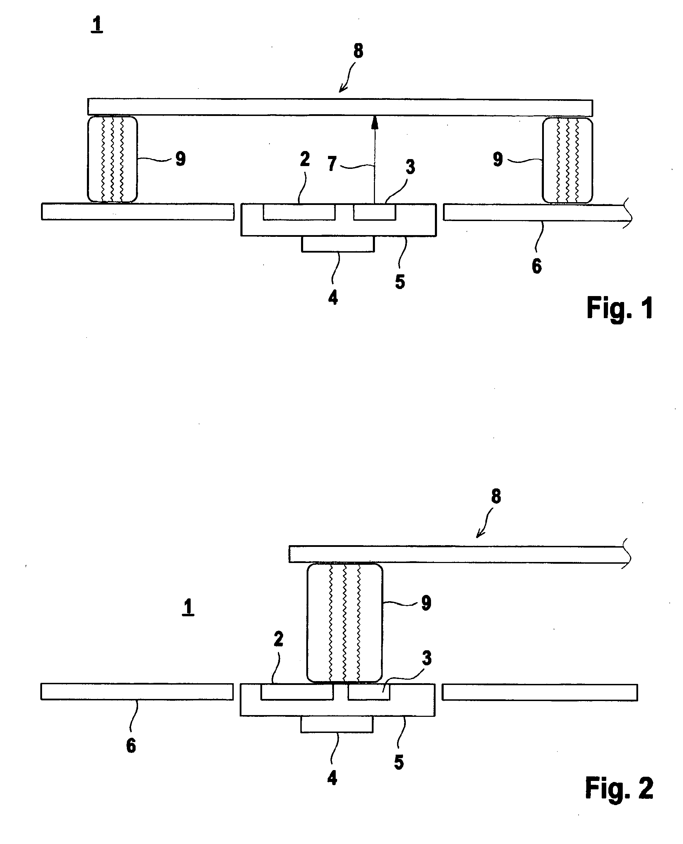

Die Figuren 1 und 2 zeigen ein erstes Ausführungsbeispiel des erfindungsgemäßen Sicherheitssystems 1. Das Sicherheitssystem 1 umfasst im vorliegenden Fall eine Sensoranordnung mit einem Gewichtssensor 2 und einem Distanzsensor 3 sowie einer Auswerteeinheit 4. Die Komponenten des Sicherheitssystems 1 sind im vorliegenden Fall in beziehungsweise an einem Schachtdeckel 5 eines Unterflursystems angeordnet, welcher in einer Fahrbahn 6, das heißt einer Straße, integriert ist. Der Gewichtssensor 2 besteht im vorliegenden Fall aus einer Wägezelle mit einer an der Oberseite des Schachtdeckels 5 liegenden Kontaktfläche. Der Distanzsensor 3 ist im vorliegenden Fall von einem optischen Sensor gebildet. Dieser emittiert zur Durchführung von Distanzmessungen Lichtstrahlen 7, deren Strahlachse im vorliegenden Fall senkrecht zur Oberfläche des Schachtdeckels 5 verläuft. Die Auswerteeinheit 4 besteht aus einem oder mehreren Mikroprozessoren. Im vorliegenden Fall ist die Auswerteeinheit 4 an der Unterseite des Schachtdeckels 5 befestigt. Die Komponenten des Sicherheitssystems 1 bilden eine Bau- und Funktionseinheit. Hierzu sind der Gewichtssensor 2 und der Distanzsensor 3 über nicht dargestellte Leitungen verbunden.

Mit dem Sicherheitssystem 1 wird erfasst, ob sich ein sicherheitskritisches Objekt in Form eines Kraftfahrzeugs 8 auf dem Schachtdeckel 5 befindet oder nicht. Dabei sollen als sicherheitskritische Zustände beide in den Figuren 1 und 2 dargestellten Fälle erfasst werden, nämlich ein oberhalb des Schachtdeckels 5 angeordnetes Kraftfahrzeug 8, das nicht direkt mit seinen Reifen 9 aufsteht (Figur 1), und ein mit einem Reifen 9 direkt auf dem Schachtdeckel 5 aufstehendes Fahrzeug (Figur 2). In beiden Fällen wird der Zugang zum Schachtdeckel 5 durch das Kraftfahrzeug 8 behindert, das heißt bei einer im Unterflursystem durchzuführenden Schalthandlung hätte eine Bedienperson keinen Zugang zum Unterflursystem, da der Schachtdeckel 5 nicht geöffnet werden kann.

Zur Erkennung von Kraftfahrzeugen 8 als sicherheitskritische Objekte und zur Unterscheidung dieser sicherheitskritischen Objekte von nicht sicherheitskritischen Objekten wie zum Beispiel Personen, erfolgt in der Auswerteeinheit 4 eine Auswertung der Sensorsignale der Sensoranordnung durch Schwellwertbewertungen, wodurch aus den analogen Sensorsignalen digitalisierte Bereichssignale gebildet werden.

Die einzelnen Schwellwerte sind an typische Kenndaten von Kraftfahrzeugen 8 angepasst.

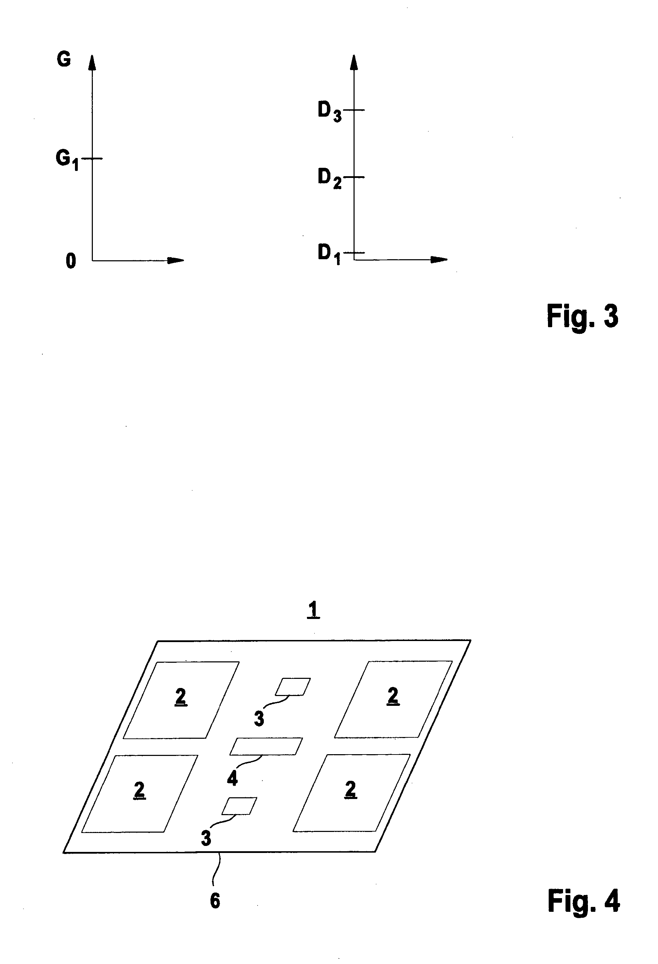

So wird das Sensorsignal des Gewichtssensors 2, wie in Figur 3 dargestellt, mit einem Schwellwert G₁ bewertet, dessen Höhe etwa dem Gewicht des kleinsten zu erfassenden Kraftfahrzeugs 8 entspricht.

Das Sensorsignal des Distanzsensors 3 wird, wie in Figur 3 dargestellt, mit drei Schwellwerten D₁, D₂, D₃ bewertet. Der erste Distanzwert D₁ entspricht einer Distanz nahe null. Die Distanzwerte D₂ und D₃ definieren diesen Bereich, der den typischen Bodenfreiheiten von Kraftfahrzeugen 8 entspricht.

Die so generierten Bereichssignale werden in der Auswerteeinheit 4 logisch verknüpft, wodurch ein binäres Ausgangssignal generiert wird, dessen Schaltzustände angeben, ob ein sicherheitskritisches Objekt, das heißt ein Kraftfahrzeug 8 auf den Schachtdeckel 5, vorhanden ist oder nicht. Das Ausgangssignal wird über Funksignale an eine externe Einheit, wie zum Beispiel eine Leitstelle des Betreibers des Unterflursystems, gesendet. Wird mit dem Sicherheitssystem 1 ein sicherheitskritisches Objekt detektiert, so wird als Ausgangssignal eine Alarmmeldung ausgegeben. Daraufhin kann in der Leitstelle das Abschleppen des Kraftfahrzeugs 8 veranlasst werden, um die Gefahrensituation zu beseitigen.

Die Generierung des Ausgangssignals wird im Folgenden anhand der Anordnungen der Figuren 1 und 2 sowie anhand der Diagramme von Figur 3 erläutert. Wird mit den Gewichtssensoren 2 der Gewichtswert Null registriert und mit dem Distanzsensor 3 der Distanzwert unendlich, so wird mit keinem dieser Sensoren ein Objekt detektiert, so dass als Ausgangssignal ein freier Schachtdeckel 5 gemeldet wird.

Liegt die Situation von Figur 1 vor, so wird mit den Gewichtssensoren 2 noch immer der Gewichtswert Null gemeldet. Jedoch wird mit dem Distanzsensor 3 ein Distanzwert im Bereich zwischen D₂ und D₃ registriert, da die Lichtstrahlen 7 auf den Boden des Kraftfahrzeugs 8 geführt sind.

In der Auswerteeinheit 4 erfolgt eine Verknüpfung beider Bereichssignale derart, dass ein im Bereich zwischen D₂ und D₃ registrierter Distanzwert für die Erkennung des Kraftfahrzeugs 8 ausreicht, obwohl der Gewichtssensor 2 noch immer den Wert Null (entsprechend einem freien Schachtdeckel) liefert. Somit wird in diesem Fall von dem Sicherheitssystem 1 eine Alarmmeldung generiert.

Die Auswertung kann auch dahingehend erweitert sein, dass eine Alarmmeldung nur dann generiert wird, wenn für eine vorgegebene Mindestdauer ein Distanzwert im Bereich zwischen D₂ und D₃ registriert wird. Damit werden unnötige Alarmmeldungen durch über den Schachtdeckel 5 fahrende Kraftfahrzeuge 8 vermieden.

Bei der Anordnung gemäß Figur 2 liefert, da das Kraftfahrzeug 8 mit einem Reifen 9 sowohl auf den Distanzsensor 3 als auch auf den Gewichtssensor 2 aufsteht, der Distanzsensor 3 einen Distanzwert kleiner als D₁ und der Gewichtssensor 2 einen Gewichtswert oberhalb von G₁.

Würde nur der Distanzwert unterhalb von D₁ liegen, jedoch der Gewichtssensor 2 einen Gewichtswert unterhalb G₁ anzeigen, würde keine Alarmmeldung generiert, da eine solche Signalkombination von einem nicht sicherheitskritischen Objekt wie einer auf dem Schachtdeckel 5 stehenden Person verursacht wäre.

Dadurch, dass im vorliegenden Fall jedoch zusätzlich zu dem Distanzwert kleiner als D₁ auch ein Gewichtswert größer als G₁ registriert wird, gilt das Kraftfahrzeug 8 als erkannt und in der Auswerteeinheit 4 wird eine Alarmmeldung generiert. Auch in diesem Fall kann für die Generierung einer Alarmmeldung gefordert werden, dass die generierten Signale des Gewichtssensors 2 und des Distanzsensors 3 für eine vorgegebene Mindestdauer anstehen.

Figur 4 zeigt ein Ausführungsbeispiel eines Sicherheitssystems 1, dessen Komponenten direkt in einer Fahrbahn 6, wie zum Beispiel einer Straße oder einem Parkplatz, angeordnet sind. Mit diesem Sicherheitssystem 1 können insbesondere Eingangsbereiche von sicherheitskritischen Anlagen überwacht werden.

Bei dem Ausführungsbeispiel gemäß Figur 4 weist das Sicherheitssystem 1 eine Sensoranordnung mit vier Gewichtssensoren 2 und zwei Distanzsensoren 3 auf, welche mit der Auswerteeinheit 4 wieder eine Bau- und Funktionseinheit bilden. Die Auswertung der Sensorsignale der Distanzsensoren 3 und Gewichtssensoren 2 zur Generierung der Ausgangssignale erfolgt analog zu dem Ausführungsbespiel der Figuren 1 bis 3.

Beispielsweise kann bei der Anordnung der Figur 4 eine Alarmmeldung dann generiert werden, wenn wenigstens einer der Gewichtssensoren 2 einen Gewichtswert oberhalb des Schwellwerts G₁ meldet, oder wenn einer der Distanzsensoren 3 einen Distanzwert im Bereich zwischen D₂ und D₃ liefert.

### Bezugszeichenliste

- (1): Sicherheitssystem
- (2): Gewichtssensor
- (3): Distanzsensor
- (4): Auswerteeinheit
- (5): Schachtdeckel
- (6): Fahrbahn
- (7): Lichtstrahlen
- (8): Kraftfahrzeug
- (9): Reifen

## Patentansprüche

1. Sicherheitssystem (1) mit einer in einem Fahrbahnsegment integrierten Sensoranordnung bestehend aus wenigstens einem Distanzsensor (3) und wenigstens einem Gewichtssensor (2), und mit einer Auswerteeinheit (4) in welcher in Abhängigkeit der Sensorsignale der Sensoranordnung ein binäres Ausgangssignal generiert wird, dessen Schaltzustände angeben, ob sich auf dem Fahrbahnsegment ein sicherheitskritisches Objekt befindet oder nicht, **dadurch gekennzeichnet, dass** das Fahrbahnsegment einen Schachtdeckel (5) eines Unterflursystems umfasst, und dass wenigstens ein von einer Wägezelle gebildeter Gewichtssensor (2) und/oder ein Distanzsensor (3) im Schachtdeckel (5) integriert ist.

2. Sicherheitssystem nach Anspruch 1, **dadurch gekennzeichnet, dass** mit diesem als sicherheitskritische Objekte auf dem Fahrbahnsegment angeordnete Kraftfahrzeuge (8) erfasst werden.

3. Sicherheitssystem nach einem der Ansprüche 1 oder 2, **dadurch gekennzeichnet, dass** die Sensoranordnung eine Mehrfachanordnung von Distanzsensoren (3) und Gewichtssensoren (2) aufweist.

4. Sicherheitssystem nach einem der Ansprüche 1 bis 3, **dadurch gekennzeichnet, dass** in der Auswerteeinheit (4) eine Schwellwertbewertung der Sensorsignale erfolgt, wodurch aus den Sensorsignalen Bereichssignale generiert werden.

5. Sicherheitssystem nach Anspruch 4, **dadurch gekennzeichnet, dass** in der Auswerteeinheit (4) durch eine logische Verknüpfung von Bereichssignalen das Ausgangssignal generiert wird.

6. Sicherheitssystem nach einem der Ansprüche 4 oder 5, **dadurch gekennzeichnet, dass** ein sicherheitskritisches Objekt als erkannt gilt, wenn die Sensorsignale wenigstens eines Distanzsensors (3) oder eines Gewichtssensors (2) innerhalb eines durch Schwellwerte definierten Bereichs liegen.

7. Sicherheitssystem nach Anspruch 6, **dadurch gekennzeichnet, dass** in der Auswerteeinheit (4) eine zeitaufgelöste Auswertung der Bereichssignale erfolgt.

8. Sicherheitssystem nach Anspruch 7, **dadurch gekennzeichnet, dass** ein sicherheitskritisches Objekt als erkannt gilt, wenn die Sensorsignale wenigstens eines Distanzsensors (3) oder eines Gewichtssensors (2) für eine vorgegebene Mindestdauer innerhalb eines durch Schwellwerte definierten Bereichs liegen.

9. Sicherheitssystem nach einem der Ansprüche 1 bis 8, **dadurch gekennzeichnet, dass** der oder ein Distanzsensor (3) von einem Ultraschallsensor oder einem optischen Sensor gebildet ist.

10. Sicherheitssystem nach einem der Ansprüche 1 bis 9, **dadurch gekennzeichnet, dass** die Auswerteeinheit (4) in dem Fahrbahnsegment integriert ist.

11. Sicherheitssystem nach einem der Ansprüche 1 bis 10, **dadurch gekennzeichnet, dass** das Ausgangssignal berührungslos oder leitungsgebunden an die externe Einheit übertragen wird.

12. Sicherheitssystem nach Anspruch 11, **dadurch gekennzeichnet, dass** das Ausgangssignal mittels Funksignalen an die externe Einheit übertragen wird.

## Claims

1. Safety system (1) with a sensor arrangement, which is integrated in a segment of a travel path and consists of at least one distance sensor (3) and at least one weight sensor (2), and with an evaluating unit (4) in which a binary output signal is generated in dependence on the sensor signals of the sensor arrangement, the switching states of which signal indicate whether or not a safety-critical object is present on the travel path segment, **characterised in that** the travel path segment comprises a shaft cover (5) of an sub-surface system and that at least one weight sensor (2), which forms a weighing cell and/or a distance sensor (3), is or are integrated in the shaft cover (5).

2. Safety system according to claim 1, **characterised in that** motor vehicles (8) present on the travel path segment are detected by this system as safety-critical objects.

3. Safety system according to one of claims 1 and 2, **characterised in that** the sensor arrangement comprises a multiple arrangement of distance sensors (3) and weight sensors (2).

4. Safety system according to any one of claims 1 to 3, **characterised in that** a threshold evaluation of the sensor signals is carried out in the evaluating unit (4), whereby region signals are generated from the sensor signals.

5. Safety system according to claim 4, **characterised in that** the output signal is generated in the evaluating unit (4) by logical linking of region signals.

6. Safety system according to one of claims 4 and 5, **characterised in that** a safety-critical object counts as recognised when the sensor signals of at least one distance sensor (3) or weight sensor (2) reside within a range defined by threshold values.

7. Safety system according to claim 6, **characterised in that** a time-resolved evaluation of the region signals is carried out in the evaluating unit (4).

8. Safety system according to claim 7, **characterised in that** a safety-critical object counts as recognised when the sensor signals of at least one distance sensor (3) or weight sensor (2) reside for a predetermined minimum time within a range defined by threshold values.

9. Safety system according to any one of claims 1 to 8, **characterised in that** the or a distance sensor (3) is formed by an ultrasonic sensor or an optical sensor.

10. Safety system according to any one of claims 1 to 9, **characterised in that** the evaluating unit (4) is integrated in the travel path segment.

11. Safety system according to any one of claims 1 to 10, **characterised in that** the output signal is transferred to the external unit contactlessly or by way of a line.

12. Safety system according to claim 11, **characterised in that** the output signal is transferred to the external unit by means of radio signals.

## Revendications

1. Système de sécurité (1) comprenant un ensemble de capteurs intégré dans un segment de chaussée, composé d'au moins un capteur de distance (3) et d'au moins un capteur de poids (2), et comprenant une unité d'évaluation (4) dans laquelle, en fonction des signaux de détection de l'ensemble de capteurs, est généré un signal de sortie binaire dont les états de commutation indiquent si un objet critique pour la sécurité se trouve ou non sur le segment de chaussée, **caractérisé en ce que** le segment de chaussée comprend un couvercle de regard (5) d'un système souterrain et qu'au moins un parmi un capteur de poids (2) formé par une cellule de pesée et/ou un capteur de distance (3) est intégré dans le couvercle de regard (5).

2. Système de sécurité selon la revendication 1, **caractérisé en ce qu'**il permet de détecter en tant qu'objets critiques pour la sécurité des véhicules automobiles (8) situés sur le segment de chaussée.

3. Système de sécurité selon l'une des revendications 1 ou 2, **caractérisé en ce que** l'ensemble de capteurs présente un agencement multiple de capteurs de distance (3) et de capteurs de poids (2).

4. Système de sécurité selon l'une des revendications 1 à 3, **caractérisé en ce qu'**une évaluation de valeur seuil des signaux de détection est effectuée dans l'unité d'évaluation (4), moyennant quoi des signaux de plage sont générés à partir des signaux de détection.

5. Système de sécurité selon la revendication 4, **caractérisé en ce que** le signal de sortie est généré dans l'unité d'évaluation (4) par une combinaison logique de signaux de plage.

6. Système de sécurité selon l'une des revendications 4 ou 5, **caractérisé en ce qu'**un objet critique pour la sécurité est considéré comme détecté lorsque les signaux de détection d'au moins un capteur de distance (3) ou d'un capteur de poids (2) se situent dans une plage définie par des valeurs seuils.

7. Système de sécurité selon la revendication 6, **caractérisé en ce qu'**une évaluation à résolution temporelle des signaux de plage est effectuée dans l'unité d'évaluation (4).

8. Système de sécurité selon la revendication 7, **caractérisé en ce qu'**un objet critique pour la sécurité est considéré comme détecté lorsque les signaux de détection d'au moins un capteur de distance (3) ou d'un capteur de poids (2) se situent dans une plage définie par des valeurs seuils pendant une durée minimale prédéfinie.

9. Système de sécurité selon l'une des revendications 1 à 8, **caractérisé en ce que** le ou un capteur de distance (3) est formé par un capteur à ultrasons ou un capteur optique.

10. Système de sécurité selon l'une des revendications 1 à 9, **caractérisé en ce que** l'unité d'évaluation (4) est intégrée dans le segment de chaussée.

11. Système de sécurité selon l'une des revendications 1 à 10, **caractérisé en ce que** le signal de sortie est transmis à l'unité externe sans contact ou par fils.

12. Système de sécurité selon la revendication 11, **caractérisé en ce que** le signal de sortie est transmis à l'unité externe au moyen de signaux radio.
